# EUROPEAN PATENT SPECIFICATION

(11) **EP 3 445 072 B1**
(45) Date of publication and mention of the grant of the patent: **25.09.2019**
(21) Application number: 17186951.4
(22) Date of filing: 18.08.2017
(51) Int. Cl.: H04W 8/18, H04W 48/18, H04W 60/00

(54) **MOBILE RADIO COMMUNICATION NETWORK AND METHOD FOR ASSOCIATING A MOBILE RADIO TERMINAL DEVICE TO A NETWORK SLICE INSTANCE OF A MOBILE RADIO COMMUNICATION NETWORK**
MOBILFUNKKOMMUNIKATIONSNETZWERK UND VERFAHREN ZUR ZUORDNUNG EINER MOBILFUNKENDGERÄTEVORRICHTUNG MIT EINER NETZWERK-SLICE-INSTANZ EINES MOBILFUNKKOMMUNIKATIONSNETZWERKS
RÉSEAU DE COMMUNICATION RADIO MOBILE ET PROCÉDÉ POUR ASSOCIER UN DISPOSITIF DE TERMINAL RADIO MOBILE À UNE INSTANCE DE TRANCHE DE RÉSEAU D'UN RÉSEAU DE COMMUNICATION RADIO MOBILE

(43) Date of publication of application: 20.02.2019
(73) Proprietor: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); MARQUES, Joan Triay, 80687 Munich (DE); KHAN, Ashiq, Tokyo 100-6150 (JP); MINOKUCHI, Atsushi, Tokyo 100-6150 (JP)
(74) Representative: Viering, Jentschura & Partner mbB Patent- und Rechtsanwälte

(56) References cited:
- WO-A1-2016/192639
- WO-A1-2017/063708
- WO-A1-2017/080518
- HUAWEI TECHNOLOGIES: "Selecting a set of slices instances serving a UE", 3GPP DRAFT; S2-174438 - SLICE SELECTION R5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Los Cabos; 20170601 25 June 2017 (2017-06-25), XP051303289, Retrieved from the Internet: URL:http://www.3gpp.org/ftp/Meetings_3GPP_ SYNC/SA2/Docs/ [retrieved on 2017-06-25]
- TELECOM ITALIA: "Resolution ENs on Registration and PDU session establishment in the context of Network Slicing", 3GPP DRAFT; S2-175604 23.501 RESOLUTION ENS NETWORK SLICING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, France; 20170821 - 20170825 15 August 2017 (2017-08-15), XP051335079, Retrieved from the Internet: URL:http://www.3gpp.org/ftp/tsg_sa/WG2_Arc h/TSGS2_122BIS_Sophia_Antipolis/Docs/ [retrieved on 2017-08-15]
- ZTE ET AL: "23.501: Network Slicing clause 5.15.5 - Early vs. Late Binding of UE with the associated NSI corresponding to Allowed S-NSSAI", 3GPP DRAFT; S2-175915 501 NS 5.15.5 EB & LB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, France; 20170821 - 20170825 15 August 2017 (2017-08-15), XP051335359, Retrieved from the Internet: URL:http://www.3gpp.org/ftp/tsg_sa/WG2_Arc h/TSGS2_122BIS_Sophia_Antipolis/Docs/ [retrieved on 2017-08-15]
- SUPPORTING COMPANIES: NOKIA ALCATEL LUCENT SHANGHAI BELL SPRINT T MOBILE USA NEC: "Network Slice Instance selection", 3GPP DRAFT; S2-174538-SLICING FUNCTION AND SLICE INSTANCE SELECTION-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , no. Shanghai; 25 June 2017 (2017-06-25), XP051303384, Retrieved from the Internet: URL:http://www.3gpp.org/ftp/Meetings_3GPP_ SYNC/SA2/Docs/ [retrieved on 2017-06-25]
- ERICSSON: "NSSF and Slice selection during the Registration procedures", 3GPP DRAFT; S2-175216_WAS4992_WAS4202 REG PROC CORR INCL NSSF SA122, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. SA WG2, no. San Jose Del Cabo; 20170626 - 20170630 3 July 2017 (2017-07-03), XP051310199, Retrieved from the Internet: URL:http://www.3gpp.org/ftp/tsg_sa/WG2_Arc h/TSGS2_122_Cabo/Docs/ [retrieved on 2017-07-03]

## Description

The present disclosure relates to communication mobile radio communication networks and methods for associating a mobile radio terminal device to a network slice instance of a mobile radio communication network.

In the core network of a mobile radio communication network, it may be desirable to have multiple core network slice instances, e.g. to support different user classes (e.g. normal and premium users) or for load balancing (i.e. to avoid overload on a single network slice). The network slice instances may be provided for the same customer (e.g. a communication service provider, e.g. a video stream service) and may therefore be configured with the same Slice Service Type (SST), e.g. eMBB (Mobile Broadband) and the same Slice Differentiator (SD), e.g. an identification of the customer, e.g. the name or identification of an enterprise. It may also occur that a specific network slice instance is required for certain UEs (User Equipments) due to an agreement with a customer, e.g. due to the fact that the customer requires that a service is provided with components from a certain manufacturer. At some point in time, a UE establishing a communication needs to be associated with a network slice instance, i.e. there needs to be a binding of a network slice instance or alternatively binding one or more network function(s) in a network slice instance for the UE. Efficient approaches for this binding, i.e. associating of (core) network slice instance with UE, are desirable.

HUAWEI TECHNOLOGIES: "Selecting a set of slices instances serving a UE", 3GPP DRAFT; S2-174438 - SLICE SELECTION R5, 3RD GENERATION PARTNERSHIP PROJECT (3GPP), vol. SA WG2, no. Los Cabos; 25 June 2017 describes selecting a set of slices instances serving a UE (cf. p.1). Furthermore, this document describes (cf. p.3+10) and explains the terms "early binding" and "late binding". In section "Proposals" (cf. p. 13 (1), (2) (3)), the document proposes to follow the concept of "late binding".

TELECOM ITALIA: "Resolution ENs on Registration and PDU session establishment in the context of Network Slicing", 3GPP DRAFT; S2-175604 23.501 RESOLUTION ENS NETWORK SLICING, vol. SA WG2, no. Sophia Antipolis, France, 15 August 2017, proposes to pursue the "late binding" approach for the UE registration in the context of Network Slicing.

WO 2017/0063708 A1 describes that a method in a user equipment for attaching the user equipment to a mobile communications network comprises receiving a list of network slice identities, wherein a network slice identity identifies a portion of the mobile communications network that serves as a logical network to a set of user equipment.

WO 2017/0080518 A1 describes systems and methods for implementing virtualized functions in control and data planes for a communications network. A method for managing a User Equipment (UE) attach request includes instantiating a Global Connection and Mobility Management (G-CMM) function configured to operate across a plurality of network slices in the communications network, determining an appropriate network slice from the plurality of network slices with the G-CMM function, and attaching the UE to the appropriate network slice.

WO 2016/0192639 A1 describes systems and methods for operating network slices in a communication network such as a 5th generation wireless communication network. Mobile device attach requests can be handled in which an appropriate network slice is selected for attaching the mobile device to. Customer service requests can be handled using existing network slices or by instantiating new network slices as needed. Mobile devices can be associated to new network slices due to roaming.

ZTE ET AL: "23.501: Network Slicing clause 5.15.5 - Early vs. Late Binding of UE with the associated NSI corresponding to Allowed S-NSSAI", 3GPP DRAFT; S2-175915 501 NS 5.15.5 EB & LB, 3RD GENERATION PARTNERSHIP PROJECT, 15 August 2017, attempts to clarify the design intent for support different levels of NRF. It also attempts to address the on-going debates on the early vs. late binding of the UE with the selected NSI corresponding to Allowed S-NSSAI determined by the NSSF.

The present invention is defined by the independent claims. Further advantageous embodiments are defined by the dependent claims.

According to one example for better understanding the present invention, a method for associating a mobile radio terminal device to a network slice instance of a mobile radio communication network is provided, the method including receiving a request for the network slice instance from the mobile radio terminal device and associating the mobile radio terminal device to the network slice instance in accordance with a timing based on an associating information parameter assigned to the requesting mobile radio terminal device.

According to further examples for better understanding the present invention, a computer readable medium and a mobile radio communication network according to the above method for associating a mobile radio terminal device to a network slice instance of a mobile radio communication network are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates a registration procedure including an early binding for a network slice instance.
- Figure 3: shows a PDU (Packet Data Unit) session establishment procedure including a late binding for a network slice instance.
- Figure 4: shows a flow diagram illustrating a decision of early binding versus late binding by a UDM (User Data Management Function).
- Figure 5: shows a flow diagram illustrating a decision of early binding versus late binding by an AMF (Access and Mobility Management Function).
- Figure 6: shows a flow diagram illustrating a decision of early binding versus late binding by an NSSF.
- Figure 7: shows a flow diagram illustrating a method for associating a mobile radio terminal device to a network slice instance of a mobile radio communication network.
- Figure 8: shows a mobile radio communication network according to an embodiment.
- Figure 9: shows a flow diagram illustrating a roaming scenario.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

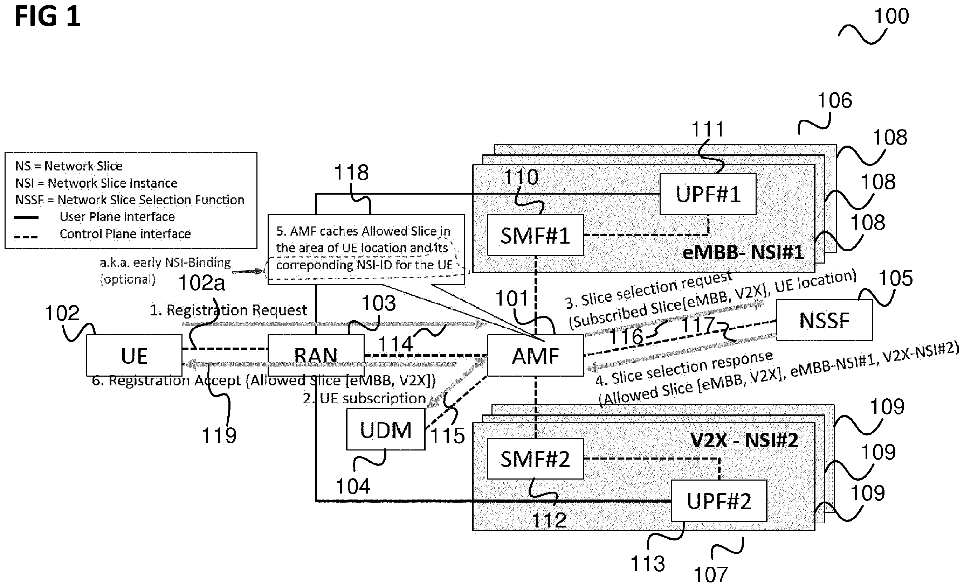

Figure 1 shows a radio communication system 100.

The radio communication system 100 includes a mobile radio terminal device 102 such as a UE (user equipment), a nano equipment (NE), and the like. The mobile radio terminal device 102 forms the terminal side while the other components of the radio communication system 100 described in the following are part of the mobile radio communication network side, i.e. part of a mobile radio communication network.

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface 102a It should be noted that the radio access network 103 may include any number of radio access network nodes.

The radio communication system 100 further includes a core network including an Access and Mobility Management Function (AMF) 101 connected to the RAN 103, a Unified Data Management (UDM) 104 and a Network Slice Selection Function (NSSF) 105.

The core network may have multiple network slices 106, 107 and for each network slice 106, 107, the operator may create multiple network slice instances (NSIs) 108, 109. In this example, the core network includes a first core network slice 106 with three core network slice instances (NSIs) 108 for providing Enhanced Mobile Broadband (eMBB) and a second core network slice 107 with three core network slice instances (NSIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network 106 includes a first Session Management Function (SMF) 110 and a first User Plane Function (UPF) 111 and each instance 109 of the second core network slice instance 107 includes a second Session Management Function (SMF) 112 and a second User Plane Function (UPF) 113.

It is also possible that the first SMF 110 and the second SMF 112 are referred with same naming, but functionality and service served by these functions maybe different.

In Figure 1, there is further shown a message flow for a registration of the UE 102 in the core network.

It is assumed that the UE 102 intends to subscribe to both eMBB and V2X services. In 114, the UE 102 sends a registration request to the AMF 101. In 115, the AMF 101 checks the UE's subscription with the UDM 104. In 116, the AMF 101 sends a slice selection request to the NSSF 105. The slice selection request indicates that the UE 102 intends to subscribe to both eMBB and V2X.

However, in the area where the UE 102 is located, there may be multiple NSIs for each slice type. In this example, in 117, the NSSF 105 sends a list of the allowed slices 108, 109 and an indication of the respective NSIs to be associated with (bound to) the allowed slices for the UE 102, i.e., for each allowed slice, which instance of the allowed slice should serve the UE 102. In this example, it is assumed that the NSSF associates eMBB-NSI#1 and V2X-NSI#2 with the UE 102.

In 118, the AMF 101 stores the list of the allowed slices 108, 109 for the UE 102 and the indication of the respective NSIs to be associated with the allowed slices for the UE 102.

In 119, in response to the registration request of 114, the AMF 101 sends the list of the allowed slices 108, 109 to the UE 102, i.e. indicates to the UE 102 which network slices are allowed for it at the UE's location.

The procedure illustrated by the message flow depicted in figure 1 illustrates an early NSI binding, i.e. the association of each allowed slice and its corresponding NSI for the UE during registration procedure. A binding can be understood as an association of a core network slice instance to a core network slice for a UE (i.e. with effect for the UE) or, equivalently, an association of the UE with the core network slice instance.

Alternatively, the mobile radio communication network may use late NSI binding. Late binding refers to the association of each allowed slice and its corresponding NSI for the UE after registration procedure, i.e. after registration of the UE, e.g. during PDU (Packet Data Unit) session establishment).

It should be noted that a communication system may be implemented to support both early NSI binding as well as late NSI binding. For example, both binding types may be required to be selectable depending on the network slice types or the operator's policy.

Early NSI binding allows reducing the time for PDU session establishment, as the NSI for a requested slice type has already been associated even before PDU session establishment thus saving time needed to realize such an association when a PDU session is requested. Furthermore, for a specific slice type (e.g. providing a ultra-low latency service) early NSI binding might be useful. However, in case there is a change of the association between NSI and network slice due to its life cycle or other operational/deployment reasons, maintenance of such association needs to be kept up-to-date.

Late NSI binding does not require keeping the association of NSI and network slice up-to-date but typically leads to an increased time for PDU session establishment e.g. late NSI binding required NSI selection mechanism during PDU session establishment.

According to various embodiments, a mechanism is provided which allows providing information based on which an early or a late NSI binding for each network slice allowed for a UE (subscriber) is performed.

For example, a parameter "early NSI binding indication" may be introduced which indicates, for a network slice, whether or not an early NSI binding is to be performed for the network slice. A network function deciding whether early or late NSI binding is to be performed may take into account the operator's policy available at the network function (e.g. AMF or NSSF) in order to make a decision whether or not to have an early NSI binding.

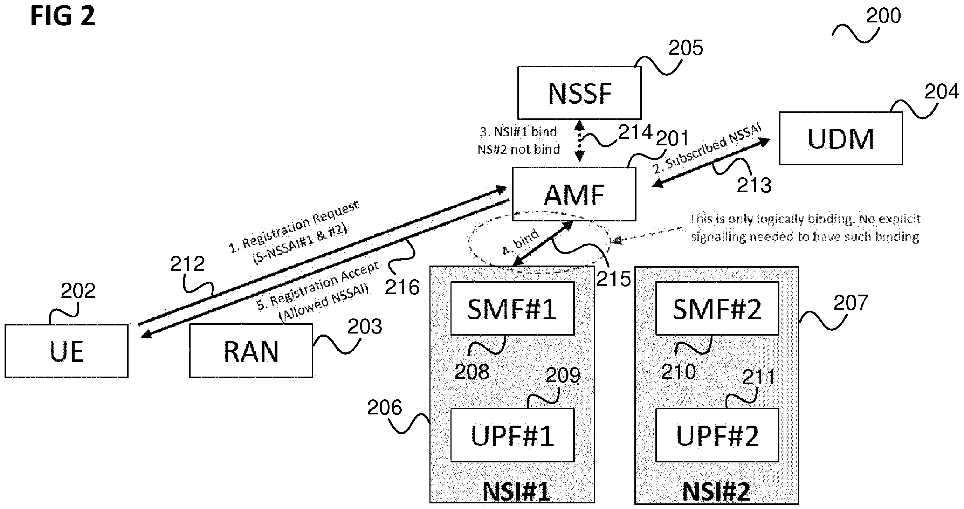

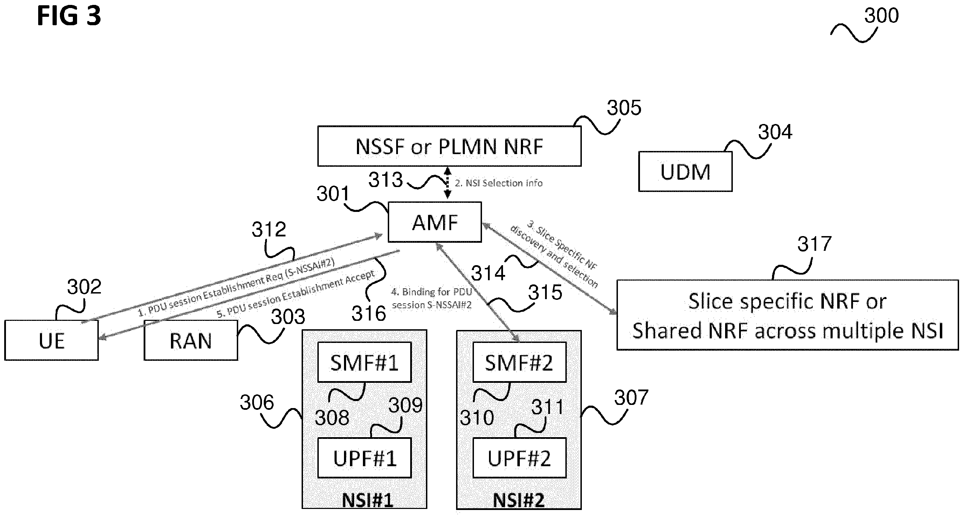

Figures 2 and 3 illustrate the application of different binding types (early binding and late binding) for different network slices for a communication system 200, 300.

Similarly to the communication system 100 of figure 1, the communication systems 200, 300 of figures 2 and 3 include a UE 202, 302, a RAN 203, 303, an AMF 201, 301 a UDM 204, 304 and an NSSF 205, 305.

Furthermore, similarly to the communication system 100, the core network includes a first (core) network slice with a first (core) network slice instance 206, 306 (identification NSI#1) and a second (core) network slice with a (core) network slice instance 207, 307 (identification NSI#2). The first network slice instance 206, 306 includes a first SMF 208, 308 and a first UPF 209, 309 and the second network slice instance 207, 307 includes a second SMF 210, 310 and a second UPF 211, 311.

Figure 2 shows the registration procedure including an early binding for the first network slice instance 206.

In 212, the UE 202 sends a registration request to the AMF 201. The registration request includes the requested S-NSSAIs.

An S-NSSAI (Single Network Slice Selection Assistance information) identifies a network slice and is comprised of:
- A Slice/Service type (SST), which refers to the expected Network Slice behaviour in terms of features and services;
- a Slice Differentiator (SD) which is optional information that complements the slice/service type(s) to differentiate amongst multiple network slices of the same slice/service type.

An allowed NSSAI is an NSSAI provided by the serving PLMN (Public Land Mobile Network) during e.g. a registration procedure, indicating the NSSAI allowed by the network for a UE in the serving PLMN for the current registration area.

A configured NSSAI is an NSSAI that has been provisioned in the UE.

A requested NSSAI is the NSSAI that the UE may provide to the network. The requested NSSAI can be a sub-set or a full-set of the configured NSSAI or the allowed NSSAI.

A subscribed S-NSSAI is an S-NSSAI based on subscriber information, which a UE is subscribed to use in a PLMN.

In 213, the AMF 201 checks the UE's subscription with the UDM 204.

In 214, the AMF 201 and the NSSF 205 exchange messages for network slice selection (e.g. as explained with reference to figure 1). In this example, it is assumed that it is decided that the network slice instances 206, 207 should be assigned to the UE 202 wherein an early binding is to be performed for the first network slice instances 206 and a late binding is to be performed for the second network slice instances 207. The decision may for example be based on different service types of the core network slice instances and/or operator's policy. Accordingly, in 215, the first network slice instance 206 is bound to the UE 202 (i.e. is bound to the first core network slice instance for the UE 202) while the second network slice instance 207 is not bound to the UE 202 at this stage.

In 216, the AMF 201 sends a registration accept to the UE 202 which includes the NSSAIs of the network slices allowed (e.g. S-NSSAI#1 and S-NSSAI#2) for the UE 202.

It is assumed that at a later stage the UE 202 sends a PDU session request for the second core network slice (NSSAI#2).

Figure 3 shows the PDU session establishment procedure including a late binding for the second network slice instance 307.

Since it has been decided to perform a late binding for the second core network slice instance 307, the second core network slice instance 307 is bound in 317 to the second core network slice in in course of PDU session establishment.

In 312, the UE 302 sends a PDU session establishment request for the second core network slice 307 to the AMF 301. In more detail, the process is as follows: the UE 302 sends a request for S-NSSAI#2, and the network (in other words the core network) will bind the S-NSSAI#2 to the NSI#2. Thus, it is to be noted that the UE 302 will not know which NSI it is associated to.

In 313, the AMF 301 obtains NSI selection information from the NSSF 305 or alternatively from a PLMN NRF (Public Land Mobile Network Network Repository Function). In 314, the AMF 301 performs a slice specific network function (NF) discovery by means of a slice specific NRF or an NRF shared across multiple NSIs 317. If the NSSF 305 has not determined the NSI for the allowed S-NSSAI and has selected a NRF (in case a slice specific NRF is deployed) the AMF 301 will communicate with NSSF 305 to get the NSI for the requested NSSAI and also slice specific/shared NRF information if available for NSI or alternatively AMF 301 will communicate with PLMN NRF to get the NSI for the requested NSSAI and also slice specific/shared NRF information.

In 315, a binding of the second core network slice instance 307 to the second core network slice for the UE 302 (i.e. with effect for the UE 302), or, in other words, a binding (or association) of the second core network slice instance 307 or binding of network functions (e.g. SMF 310 and UPF 311) in a second core network slice instance 307 to the UE 302 is performed. Since this happens after the registration procedure has been finished, this can be seen as a late binding.

In 316, the AMF 301 sends a PDU session establishment accept message to the UE 302.

Thus, according to one embodiment, the AMF 201, 301 or the NSSF 205, 305 bind one or more S-NSSAI(s) of the NSSAIs allowed for the UE 202, 302 to core network slice instances, for example based on the operators policy, e.g. bind the first instance 206, 306 (NSI#1) in the registration procedure and bind the second instance 207, 307 (NSI#2) during PDU session establishment.

The decision whether to perform early or late binding (i.e. the decision of early binding versus late binding) of a core network slice may be taken by various components in the architecture:
- At UDM 204, 304
   - Early or late NSI binding may be included as a part of the UE's subscription data which is mapped to each subscribed S-NSSAI
   - UDM 204, 304 provides this subscription data to the AMF 201, 301 and/or the NSSF 205, 305 (e.g. via AMF 201, 301)
- At AMF 201, 301
   - A local policy may be configured at the AMF 201, 301 specifying whether an early NSI binding or a late NSI binding is to be performed for a certain S-NSSAI to serve for a particular UE
   - Such a configuration can be done maybe by OAM (Operation, Administration and Maintenance)
- At NSSF 205, 305
   - A local policy may be configured at the NSSF 205, 305 specifying whether an early NSI binding or a late NSI binding is to be performed for a certain S-NSSAI to serve for a particular UE
   - Such a configuration can be done maybe by OAM (Operation, Administration and Maintenance)
- At a PCF (Policy Control Function)
   - Early or late NSI binding may be included as a part of policy information which is mapped to each subscribed S-NSSAI
   - The PCF provides this policy information either to the AMF 201, 301 or to the NSSF 205, 305.

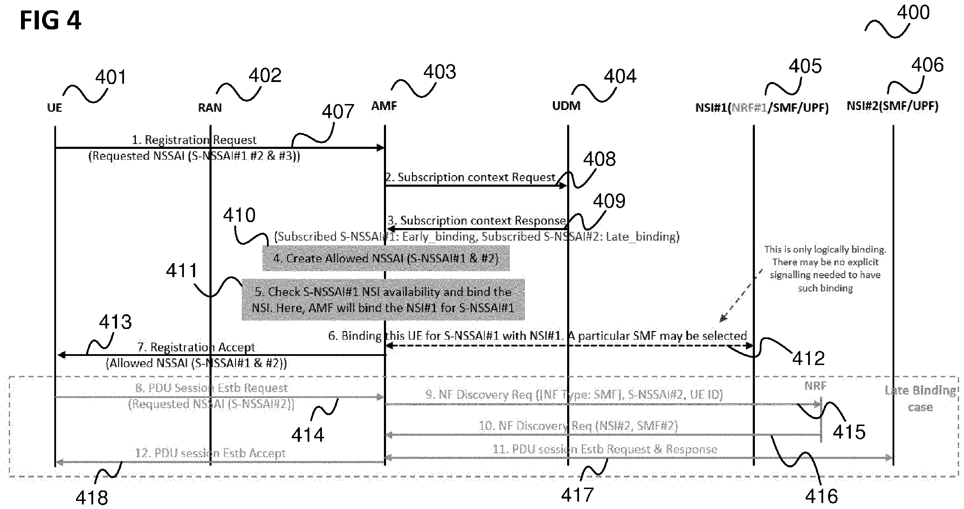

Figure 4 shows a flow diagram 400 illustrating a decision of early binding versus late binding by the UDM.

The message flow 400 takes place between a UE 401, a RAN 402, an AMF 403, a UDM 404, a first network slice instance 405 and a second network slice instance 406.

It is assumed that early binding is to be applied for the first network slice instance 405 and late binding is to be applied for the second slice instance 406.

In 407, the UE 401 sends a registration request to the AMF 403. In this example the UE 401 requests registration for three network slices with identifications S-NSSAI#1, S-NSSAI#2 and S-NSSAI#3.

In 408, the AMF 403 sends a subscription context request to the UDM 404 which responds in 409 with a subscription context response.

It is assumed that the UDM 404 decides that an early binding is to be performed for the first network slice instance 405 and a late binding is to be performed for the second network slice instance 406. The UDM 404 includes the result of this decision into the subscription context response.

In 410, the AMF 403 creates the list of allowed network slices for the UE, in this example S-NSSAI#1 and S-NSSAI#2.

In 411, the AMF 403 checks the availability of an NSI for the network slice S-NSSAI#1 and (assumed that the first network slice instance 405 is available), in 412, binds the first network slice instance 405 for the UE 401, i.e. the AMF 403 binds NSI#1 for S-NSSAI#1. This may include the selection of a particular SMF.

In 413, the AMF 403 sends a registration accept including the list of allowed NSSAIs (e.g. S-NSSAI#1 and S-NSSAI#2) to the UE 401.

At a later stage, in 414, the UE 401 sends a PDU session establishment request for S-NSSAI#2 to the AMF 403.

In 415 and 416, the AMF 403 performs a NF discovery procedure with an NRF. As a result, the second core network slice instance 406 is bound to the UE 401 (late binding).

In 417, the AMF 403 exchanges a PDU session request and response with the second core network slice instance 406.

In 418, the AMF 403 sends a PDU session establishment accept message to the UE 401.

For example, the UE's subscription profile stored at the UDM 404 includes an information whether an early NSI binding is required or a late NSI binding is possible. Such information can be realized, for example, by
- Specifying a type of NSI binding for each subscribed S-NSSAI, e.g. S-NSSAI-Binding-Type = "Early Binding" or "Late Binding" or
- an indication, for each subscribed S-NSSAI, whether to perform early NSI binding, e.g. S-NSSAI-Early-NSI-Binding = "True" or "False"

It should be noted that the NRF involved in 415 and 416 can be a PLMN NRF or an NRF shared across multiple network slices. In case of a PLMN NRF, this PLMN NRF provides slice specific NRF information. Thus, the AMF 403 can discover an SMF for a specific slice (i.e. S-NSSAI#2 in the above example).

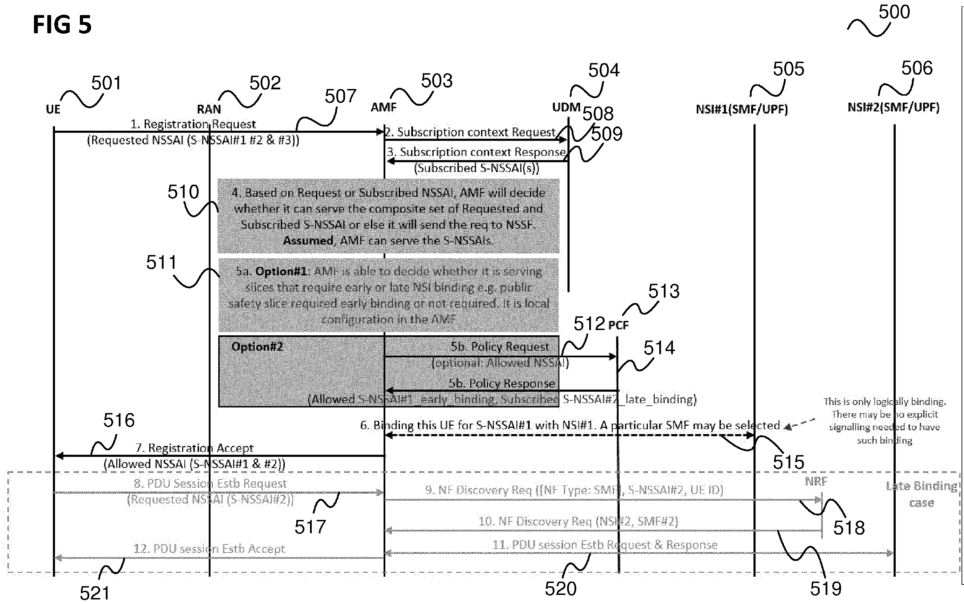

Figure 5 shows a flow diagram 500 illustrating a decision of early binding versus late binding by the AMF.

Similarly to figure 4, the message flow 500 takes place between a UE 501, a RAN 502, an AMF 503, a UDM 504, a first network slice instance 505 and a second network slice instance 506. Furthermore, a PCF 513 may be involved in the message flow.

It is assumed that early binding is to be applied for the first network slice instance 505 and late binding is to be applied for the second slice instance 506.

In 507, the UE 501 sends a registration request to the AMF 503. In this example the UE 501 requests registration for three network slices with identifications S-NSSAI#1, S-NSSAI#2 and S-NSSAI#3.

In 508, the AMF 503 sends a subscription context request to the UDM 504 which responds in 509 with a subscription context response.

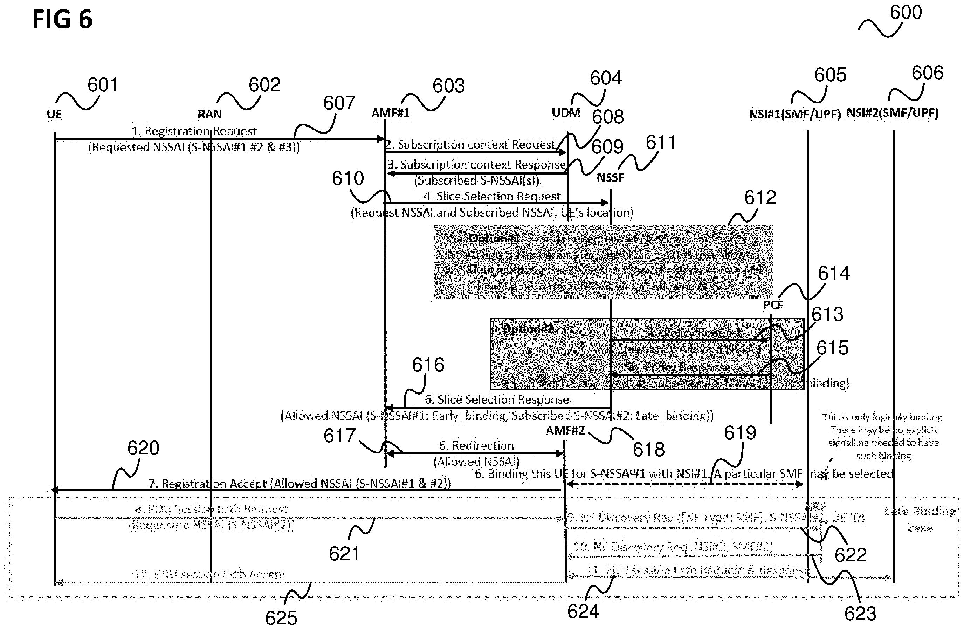

In 510, based on request or subscribed NSSAIs, the AMF 503 decides if it can serve the composite set of requested and subscribed S-NSSAIs. Else, it sends the request to an NSSF (see example of figure 6). In this example, it is assumed that the AMF 503 can serve the S-NSSAIs.

In 511, as a first option, the AMF 503 decides whether it is serving slices that require early or late NSI binding e.g. public safety slice required early binding or not required. The AMF 403 may take this decision based on its (local) configuration, i.e. it may be configured in the AMF 403 which core network slices require early NSI binding and which core network slices require late NSI binding.

In 512, as a second option, e.g. if the first option is not available, the AMF 503 requests a policy from a PCF 513 which responds to the policy request in 514. The response specifies which core network slices require early NSI binding and which core network slices require late NSI binding.

In 515, the AMF 503 binds the first network slice instance 505 for the UE 501, i.e. the AMF 503 binds NSI#1 for S-NSSAI#1. This may include the selection of a particular SMF.

In 516, the AMF 503 sends a registration accept including the list of allowed NSSAIs (i.e. S-NSSAI#1 and S-NSSAI#2) to the UE 501.

At a later stage, in 517, the UE 501 sends a PDU session establishment request to the AMF 503.

In 518 and 519, the AMF 503 performs a NF discovery procedure with an NRF. As a result, the second core network slice instance 506 is bound to the UE 501 (late binding).

In 520, the AMF 503 exchanges a PDU session request and response with the second core network slice instance 506.

In 521, the AMF 503 sends a PDU session establishment accept message to the UE 501.

It should be noted that the NRF involved in 518 and 519 can be a PLMN NRF or an NRF shared across multiple network slices. In case of a PLMN NRF, this PLMN NRF provides slice specific NRF information or shared NRF information. Thus, the AMF 503 can discover an SMF for a specific slice (i.e. S-NSSAI#2 in the above example).

Figure 6 shows a flow diagram 600 illustrating a decision of early binding versus late binding by the NSSF.

Similarly to figure 4, the message flow 600 takes place between a UE 601, a RAN 602, an AMF 603, a UDM 604, a first network slice instance 605 and a second network slice instance 606. Furthermore, an NSSF 611, a second AMF 618 and possibly also a PCF 614 are involved in the message flow.

It is assumed that early binding is to be applied for the first network slice instance 605 and late binding is to be applied for the second slice instance 606.

In 607, the UE 601 sends a registration request to the AMF 603. In this example the UE 601 requests registration for three network slices with identifications S-NSSAI#1, S-NSSAI#2 and S-NSSAI#3.

In 608, the AMF 603 sends a subscription context request to the UDM 604 which responds in 609 with a subscription context response.

In 610, the AMF 603 sends a slice selection request to the NSSF 611.

In 612, as a first option, based on the requested NSSAIs and the subscribed NSSAIs and possibly other parameters, the NSSF 611 creates the list of allowed NSSAIs. In addition, the NSSF 611 performs a mapping of early NSI binding or late NSI binding to the allowed NSSAIs. It may be configured in in the NSSF 611 which core network slices supported by the second AMF 618 require early NSI binding and which require late NSI binding.

In 613, as a second option, e.g. if the first option is not available, the NSSF 611 requests a policy from a PCF 614 which responds to the policy request in 615. The response specifies which core network slices require early NSI binding and which core network slices require late NSI binding.

In 616, the NSSF 611 sends a slice selection response to the AMF 603 which includes the list of allowed NSSAIs, second AMF set information or second AMF 618 information as well as, for each of the allowed NSSAIs, whether to perform early binding or late binding. In case, any S-NSSAI required early binding, the NSSF 611 maybe includes (in 616) the slice specific NRF or share NRF information of the early binding S-NSSAI.

In 617, a redirection to a second AMF 618 is performed.

In 619, the second AMF 618 binds the first network slice instance 605 for the UE 601, i.e. the AMF 618 binds NSI#1 for S-NSSAI#1. This may include the selection of a particular SMF.

In 620, the second AMF 618 sends a registration accept including the list of allowed NSSAIs (i.e. S-NSSAI#1 and S-NSSAI#2) to the UE 601.

At a later stage, in 621, the UE 601 sends a PDU session establishment request for a S-NSSAI#2 to the second AMF 618.

In 622 and 623, the second AMF 618 performs a NF discovery procedure with an NRF. As a result, the second core network slice instance 606 is bound to the UE 601 (late binding).

In 624, the second AMF 618 exchanges a PDU session request and response with the second core network slice instance 606.

In 625, the second AMF 618 sends a PDU session establishment accept message to the UE 601.

It should be noted that the NRF involved in 622 and 623 can be a PLMN NRF or an NRF shared across multiple network slices. In case of a PLMN NRF, this PLMN NRF provides slice specific NRF information or shared NRF information. Thus, the second AMF 618 can discover an SMF for a specific slice (i.e. S-NSSAI#2 in the above example).

Furthermore, if the NSSF 611 is not able to determine whether to perform early or late binding for one or more allowed core network slices from neither the first and the second option, the second AMF 618 may determine whether to perform early or late NSI binding based on the allowed NSSAIs as in the example of figure 2.

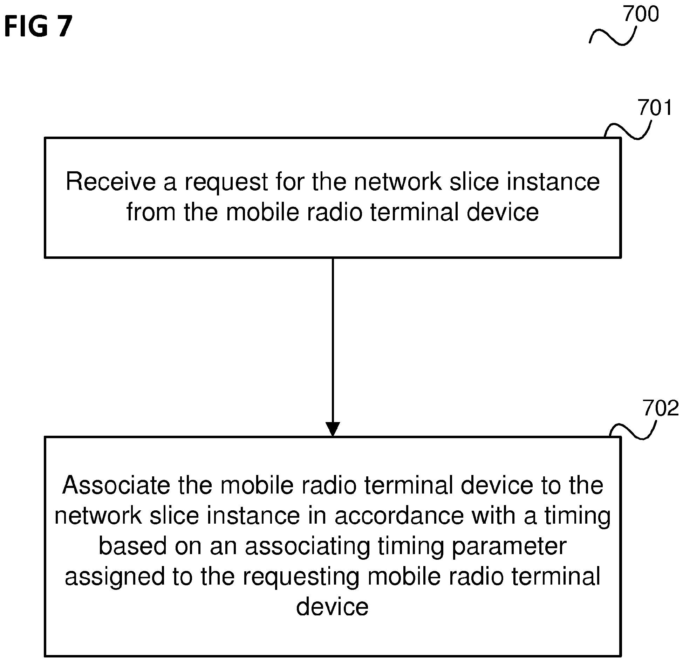

In summary, according to various embodiments, a method is provided as illustrated in figure 7.

Figure 7 shows a flow diagram 700 illustrating a method for associating a mobile radio terminal device to a network slice instance of a mobile radio communication network.

In 701, a request for the network slice instance is received from the mobile radio terminal device.

In 702, the mobile radio terminal device is associated to the network slice instance in accordance with a timing based on an associating information parameter assigned to the requesting mobile radio terminal device.

According to various embodiments, in other words, there is a selection of the time when a mobile radio terminal device is associated with a (core) network slice instance. This selection is based on an information parameter. This can be seen as a dynamic binding of a network slice instance for the mobile radio terminal device. The time of the association may correspond to various stages of, e.g. a communication establishment by the mobile radio terminal device, e.g. during registration of the mobile radio terminal device or after registration, e.g. during session establishment. In other words, the selection may be between an early binding (e.g. during registration) and late binding (e.g. during session establishment after successful registration, e.g. after the network has sent a registration acknowledgement to the mobile radio terminal device).

The approach of figure 7 may for example give flexibility when to have early NSI binding and when to have late NSI binding. For example, whether to perform early NSI binding or late NSI binding for a network slice may depend on the slice type and/or operator's need.

For example, a parameter "early binding indication" is introduced. Further, an operator's policy available at the respective network function performing the decision when to perform the binding (e.g. an AMF or an NSSF) may be taken into account. In particular, an operator may decide whether to have early or late NSI binding to fit the operator's needs.

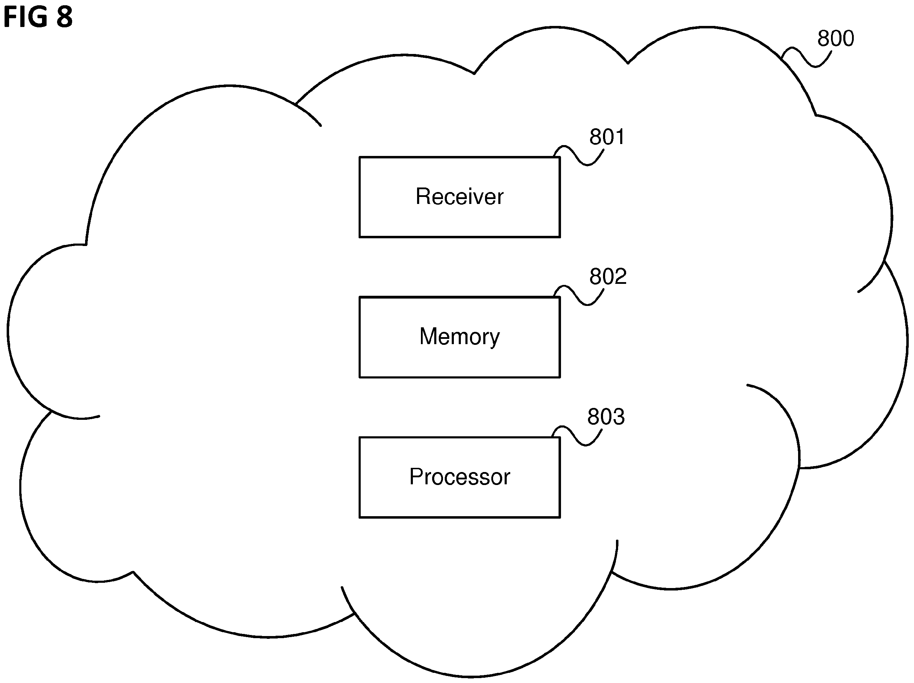

The method of figure 7 is for example carried out a mobile radio communication network as illustrated in figure 8.

Figure 8 shows a mobile radio communication network 800 according to an embodiment.

The mobile radio communication network 800 includes a receiver 801 configured to receive a request to associate a network slice instance to a mobile radio terminal device from the mobile radio terminal device and a memory 802 storing at least one information parameter assigned to a mobile radio terminal device representing a timing information for associating the mobile radio terminal device to a network slice instance.

Furthermore, the mobile radio communication network 800 includes one or more processors 803 configured to associate the mobile radio terminal device to the network slice instance in accordance with a timing based on the stored associating information parameter assigned to the requesting mobile radio terminal device.

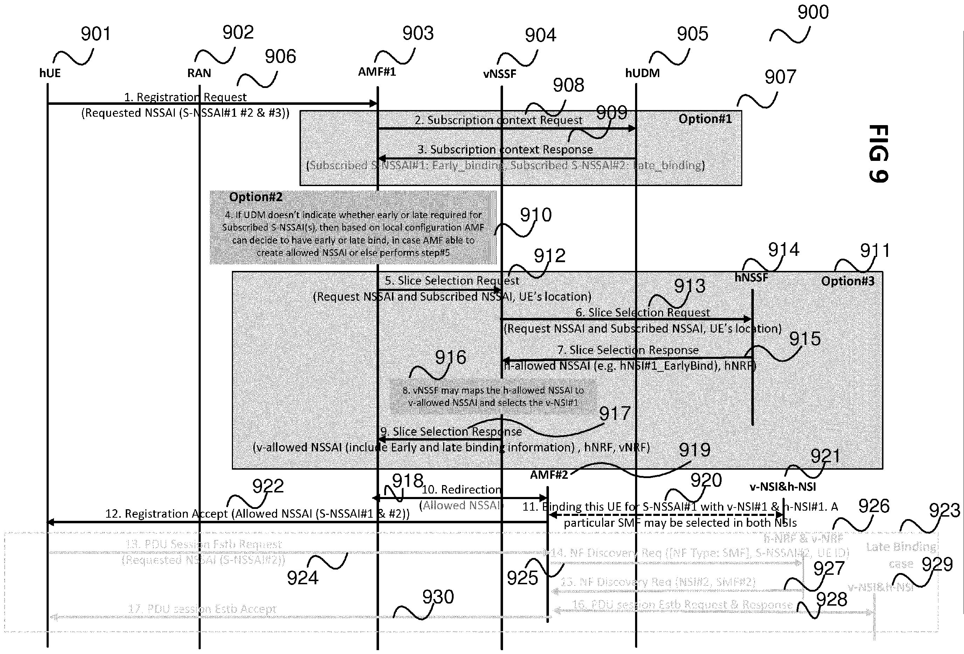

Figure 9 shows a flow diagram 900 illustrating a decision of early binding versus late binding in a roaming scenario, in other words, a home routed case.

The message flow 900 takes place between a (home) UE (also referred to as hUE) 901, a RAN 902, an a first AMF#1 903, a (visitor) NSSF (also referred to as vNSSF) 904 and a (home) UDM (also referred to as hUDM) 905.

In 906, the hUE 901 sends a registration request to the first AMF#1 903. In this example, the hUE 901 requests registration for three network slices with identifications S-NSSAI#1, S-NSSAI#2 and S-NSSAI#3.

In a first option (block Option#1 in Figure 9) 907, after having received the registration request of 906, the first AMF#1 903 sends a subscription context request 908 to the hUDM 905, and in response thereof, the hUDM 905 sends a corresponding subscription context response 909 to the first AMF#1 903.

The subscription context response 909 may include the following message parameters:
- Subscribed S-NSSAI#1: Early_binding;
- Subscribed S-NSSAI#2: Late_binding.

In a second option (block Option#2 in Figure 9) 910, if UDM does not indicate whether early binding or late binding is required for the subscribed S-NSSAI(s), then based on local configuration the first AMF#1 903 can decide to have early binding or late binding, in case the first AMF#1 903 is able to create the allowed NSSAI or else performs the following process 912 of a third option 911 (block Option#3 in Figure 9).

In the third option 911, in 912, the first AMF#1 903, after having received the registration request of 906, sends a slice selection request to the vNSSF 904. The slice selection request may include information about the hUE's 901 location, a requesting NSSAI and a subscribed NSSAI.

In 913, the vNSSF 904 may forward the slice selection request to a home NSSF 914 (also referred to as hNSSF 914). The hNSSF 914 acts as a home NSSF of the respective hUE 901. The slice selection request may include information about the hUE's 901 location, a requesting NSSAI and a subscribed NSSAI.

In 915, in response to the receipt of the slice selection request, the hNSSF 914 sends a slice selection response back to the requesting vNSSF 904. The slice selection response may include a list of allowed NSSAIs, as well as, for each of the allowed NSSAIs, whether to perform early binding or late binding, and optionally, in case any S-NSSAI required early binding, the slice specific home NRF (hNRF) or share NRF information of the early binding S-NSSAI.

In 916, after having received the slice selection response from the hNSSF 914, the vNSSF 904 may map the home-allowed (hallowed) NSSAI to visitor-allowed (v-allowed) NSSAI and may select e.g. the v-NSI#1 or alternative, vNSSF may create the allowed NSSAI based on information received from hNSSF, in case hNSSF not sends the allowed NSSAI.

Then, in 917, the vNSSF 904 sends a slice selection response to the first AMF#1 903. The slice selection response of 917 may include a list of v-allowed NSSAI including the respectively assigned parameter (one example of an associating information parameter) indicating whether early binding or late binding is provided for the respective NSSAI. The slice selection response of 917 may further include the indication of the hNRF and the vNRF).

Then, in 918, a redirection may be performed between the first AMF#1 904 and a second AMF#2 919 for an allowed NSSAI.

Subsequently, in 920, a binding (which may also be referred to as associating) of the hUE 901 with the v-NSI#1 and h-NSI#1 921 for the S-NSSAI#1, for example. A particular SMF may be selected in both NSIs.

After having completed this binding process 920, in 922, second AMF#2 919 sends a registration accept to the hUE 901. The registration accept may include the allowed NSSAI, e.g. S-NSSAI#1 and S-NSSAI#2.

For the case of a late binding, which is illustrated in block 923, in 924, the hUE 901 sends a PDU session establishment request to the second AMF#2 919. The PDU session establishment request may include the requested NSSAI, e.g. S-NSSAI#2.

In 925, the second AMF#2 sends an NF discovery request e.g. including the NF type, SMF, e.g. S-NSSAI#2, and the identification of the hUE 901 (UE ID), to a h-NRF and v-NRF 926.

In response to the NF discovery request, in 927, the h-NRF and v-NRF 926 may send a corresponding NF discovery response to the requesting second AMF#2 919. The NF discovery response may include e.g. NSI#2 and SMF#2.

After having received the NF discovery response, the second AMF#2 919, in 928, sends a PDU session establishment request to a v-NSI and h-NSI 929, and in response to the receipt of the PDU session establishment request, the v-NSI and h-NSI 929 sends a corresponding PDU session establishment response to the second AMF#2 919.

Finally, in 930, the second AMF#2 919, sends a PDU session establishment accept to the hUE 901.

In the following, various examples will be illustrated:
Example 1 is a method for associating a mobile radio terminal device to a network slice instance of a mobile radio communication network. The method may include receiving a request for connecting to a network slice from the mobile radio terminal device, and associating the mobile radio terminal device to a network slice instance from a set of network slice instances in accordance with a timing based on an associating information parameter assigned to the requesting mobile radio terminal device.
In Example 2, the subject-matter of Example 1 may optionally include that the method further includes selecting the network slice instance from a set of network slice instances for different types of network slices.
In Example 3, the subject matter of any one of Examples 1 or 2 may optionally include that the method is performed by one or more processors of a mobile radio communication core network.
In Example 4, the subject matter of any one of Examples 1 to 3 may optionally include that the method is performed during a process in which the mobile radio terminal device accesses the mobile radio communication network.
In Example 5, the subject matter of any one of Examples 1 to 4 may optionally include that the method further includes determining the associating information parameter from a terminal device specific profile stored in the mobile radio communication network.
In Example 6, the subject-matter of Example 5 may optionally include that the profile is a mobile radio communication network subscriber specific profile.
In Example 7, the subject matter of any one of Examples 5 or 6 may optionally include that the profile is a User Equipment (UE) subscription profile.
In Example 8, the subject matter of any one of Examples 1 to 7 may optionally include that the method is performed by one or more processors implementing an access and mobility management function handling mobility management and mobile network access control for the mobile radio terminal device to access the mobile radio communication network.
In Example 9, the subject matter of any one of Examples 5 to 8 may optionally include that the profile further includes network slice information for selecting a specific network slice instance for an associated mobile radio terminal device.
In Example 10, the subject matter of any one of Examples 1 to 9 may optionally include that the method further includes performing a mobile radio communication network operator's policy for selecting a network slice to associate the mobile radio terminal device to a particular network slice instance.
In Example 11, the subject-matter of Example 10 may optionally include that the performing a mobile radio communication network operator's policy is implemented by a policy control function of the mobile radio communication network.
In Example 12, the subject-matter of Example 10 may optionally include that the performing a mobile radio communication network operator's policy is implemented by a network slice selection function of the mobile radio communication network.
In Example 13, the subject-matter of Example 10 may optionally include that the performing a mobile radio communication network operator's policy is implemented by an access and mobility management function of the mobile radio communication network.
In Example 14, the subject matter of any one of Examples 1 to 13 may optionally include that the associating information parameter is stored in a user data management function of the mobile radio communication network.
In Example 15, the subject matter of any one of Examples 1 to 14 may optionally include that the associating information parameter indicates whether the associating should be performed during a registration process of the mobile radio terminal device or during a protocol data unit session establishment. Example 16 is a computer readable medium having stored a plurality of instructions, when carried out by one or more processors, implement a method for associating a mobile radio terminal device to a network slice instance of a mobile radio communication network of any one of Examples 1 to 15.
Example 17 is a mobile radio communication network, which may include a receiver configured to receive a request for connecting to a network slice, a memory storing at least one information parameter assigned to a mobile radio terminal device representing an associating indication information for associating the mobile radio terminal device to a network slice instance, and one or more processors configured to associate the mobile radio terminal device to a network slice instance from a set of network slice instances in accordance with a timing based on the stored associating information parameter assigned to the requesting mobile radio terminal device.
In Example 18, the subject-matter of Example 17 may optionally include that the one or more processors are configured to select the network slice instance from a set of network slice instances for different types of network slices.
In Example 19, the subject matter of any one of Examples 17 or 18 may optionally include that the one or more processors are one or more processors of a mobile radio communication core network.
In Example 20, the subject matter of any one of Examples 17 to 19 may optionally include that the one or more processors are configured to perform the associating during a process in which the mobile radio terminal device accesses the mobile radio communication network.
In Example 21, the subject matter of any one of Examples 17 to 20 may optionally include that the one or more processors are configured to determine the associating information parameter from a terminal device specific profile stored in the mobile radio communication network.
In Example 22, the subject-matter of Example 21 may optionally include that the profile is a mobile radio communication network subscriber specific profile.
In Example 23, the subject matter of any one of Examples 21 or 22 may optionally include that the profile is a User Equipment subscription profile.
In Example 24, the subject matter of any one of Examples 17 to 23 may optionally include that the one or more processors are configured to implement an access and mobility management function handling mobility management and mobile network access control for the mobile radio terminal device to access the mobile radio communication network.
In Example 25, the subject matter of any one of Examples 21 to 24 may optionally include that the profile further includes network slice information for selecting a specific network slice instance for an associated mobile radio terminal device.
In Example 26, the subject matter of any one of Examples 17 to 25 may optionally include that the one or more processors are configured to perform a mobile radio communication network operator's policy for selecting a network slice to associate the mobile radio terminal device to a particular network slice instance.
In Example 27, the subject-matter of Example 26 may optionally include that wherein the performing a mobile radio communication network operator's policy is implemented by a policy control function of the mobile radio communication network.
In Example 28, the subject-matter of Example 26 may optionally include that the performing a mobile radio communication network operator's policy is implemented by a network slice selection function of the mobile radio communication network.
In Example 29, the subject-matter of Example 26 may optionally include that the performing a mobile radio communication network operator's policy is implemented by an access and mobility management function of the mobile radio communication network.
In Example 30, the subject matter of any one of Examples 17 to 29 may optionally include that the memory configured to store the associating information parameter is part of a user data management function of the mobile radio communication network.
In Example 31, the subject matter of any one of Examples 17 to 30 may optionally include that the associating information parameter indicates whether the associating should be performed during a registration process of the mobile radio terminal device or during a protocol data unit session establishment.
Example 32 is a method for associating a mobile radio terminal device to a network slice instance of a mobile radio communication network. The method may include receiving network slice selection assistant information from the mobile radio terminal device, determining an associating information parameter assigned to the requesting mobile radio terminal device, and associating the mobile radio terminal device to the network slice instance in accordance with a timing based on the determined associating information parameter.
In Example 33, the subject-matter of Example 32 may optionally include that the method further includes selecting the network slice instance from a set of network slice instances in accordance with the received network slice selection assistant information.
In Example 34, the subject-matter of Example 33 may optionally include that the method further includes selecting the network slice instance from a set of network slice instances for different types of network slices in accordance with the received network slice selection assistant information.
In Example 35, the subject matter of any one of Examples 32 to 34 may optionally include that the method is performed by one or more processors of a mobile radio communication core network.
In Example 36, the subject matter of any one of Examples 32 to 35 may optionally include that the method is performed during a process in which the mobile radio terminal device accesses the mobile radio communication network.
In Example 37, the subject matter of any one of Examples 32 to 36 may optionally include that the method further includes determining the associating information parameter from a terminal device specific profile stored in the mobile radio communication network.
In Example 38, the subject-matter of Example 37 may optionally include that the profile is a mobile radio communication network subscriber specific profile.
In Example 39, the subject matter of any one of Examples 37 or 38 may optionally include that the profile is a User Equipment (UE) subscription profile.
In Example 40, the subject matter of any one of Examples 32 to 39 may optionally include that the method is performed by one or more processors implementing an access and mobility management function handling mobility management and mobile network access control for the mobile radio terminal device to access the mobile radio communication network.
In Example 41, the subject matter of any one of Examples 37 to 40 may optionally include that the profile further includes network slice information for selecting a specific network slice instance for an associated mobile radio terminal device.
In Example 42, the subject matter of any one of Examples 32 to 41 may optionally include that the method further includes performing a mobile radio communication network operator's policy for selecting a network slice to associate the mobile radio terminal device to a particular network slice instance.
In Example 43, the subject-matter of Example 42 may optionally include that the performing a mobile radio communication network operator's policy is implemented by a policy control function of the mobile radio communication network.
In Example 44, the subject-matter of Example 42 may optionally include that the performing a mobile radio communication network operator's policy is implemented by a network slice selection function of the mobile radio communication network.
In Example 45, the subject-matter of Example 42 may optionally include that the performing a mobile radio communication network operator's policy is implemented by an access and mobility management function of the mobile radio communication network.
In Example 46, the subject matter of any one of Examples 32 to 45 may optionally include that the associating information parameter is stored in a user data management function of the mobile radio communication network.
In Example 47, the subject matter of any one of Examples 37 to 46 may optionally include that the associating information parameter indicates whether the associating should be performed during a registration process of the mobile radio terminal device or during a protocol data unit session establishment.
Example 48 is a computer readable medium having stored a plurality of instructions, when carried out by one or more processors, implement a method for associating a mobile radio terminal device to a network slice instance of a mobile radio communication network of any one of Examples 32 to 47.
Example 49 is a mobile radio communication network, which may include a receiver configured to receive network slice selection assistant information from the mobile radio terminal device, and one or more processors configured to determine an associating information parameter assigned to the requesting mobile radio terminal device, and to associate the mobile radio terminal device to the network slice instance in accordance with a timing based on the determined associating information parameter.
In Example 50, the subject-matter of Example 49 may optionally include that the one or more processors are configured to select the network slice instance from a set of network slice instances in accordance with the received network slice selection assistant information.
In Example 51, the subject-matter of Example 50 may optionally include that the one or more processors are configured to select the network slice instance from a set of network slice instances for different types of network slices in accordance with the received network slice selection assistant information.
In Example 52, the subject matter of any one of Examples 49 to 51 may optionally include that the one or more processors are one or more processors of a mobile radio communication core network.
In Example 53, the subject matter of any one of Examples 49 to 52 may optionally include that the one or more processors are configured to perform the associating during a process in which the mobile radio terminal device accesses the mobile radio communication network.
In Example 54, the subject matter of any one of Examples 49 to 53 may optionally include that the one or more processors are configured to determine the associating information parameter from a terminal device specific profile stored in the mobile radio communication network.
In Example 55, the subject-matter of Example 54 may optionally include that the profile is a mobile radio communication network subscriber specific profile.
In Example 56, the subject matter of any one of Examples 54 or 55 may optionally include that the profile is a User Equipment subscription profile.
In Example 57, the subject matter of any one of Examples 49 to 56 may optionally include that the one or more processors are configured to implement an access and mobility management function handling mobility management and mobile network access control for the mobile radio terminal device to access the mobile radio communication network.
In Example 58, the subject matter of any one of Examples 54 to 57 may optionally include that the profile further includes network slice information for selecting a specific network slice instance for an associated mobile radio terminal device.
In Example 59, the subject matter of any one of Examples 49 to 58 may optionally include that the one or more processors are configured to perform a mobile radio communication network operator's policy for selecting a network slice to associate the mobile radio terminal device to a particular network slice instance.
In Example 60, the subject-matter of Example 59 may optionally include that the performing a mobile radio communication network operator's policy is implemented by a policy control function of the mobile radio communication network.
In Example 61, the subject-matter of Example 59 may optionally include that the performing a mobile radio communication network operator's policy is implemented by a network slice selection function of the mobile radio communication network.
In Example 62, the subject-matter of Example 59 may optionally include that the performing a mobile radio communication network operator's policy is implemented by an access and mobility management function of the mobile radio communication network.
In Example 63, the subject matter of any one of Examples 49 to 62 may optionally include that the memory configures to store the associating information parameter is part of a user data management function of the mobile radio communication network.
In Example 64, the subject matter of any one of Examples 49 to 63 may optionally include that the associating information parameter indicates whether the associating should be performed during a registration process of the mobile radio terminal device or during a protocol data unit session establishment.

According to a further example, a method for associating a User Equipment with a Network Slice Instance (NSI) of a mobile communication network with a mobile core network including a set of network slice instances for different types of network slice is provided. The method includes a UE accessing a mobile communication network, an Access and Mobility management function (AMF) handling mobility management and mobile network access control for the UE to access mobile communication network, a UE subscription profile (User Data Management, UDM) storing relevant network slice information for the UE, a network function providing an operator's policy for which network slice to associate a UE to a particular network slice instance, and a network function enforcing an operator's policy for which a network slice to associate a UE to a particular network slice instance.

The network function providing an operator's policy for which network slice to associate a UE to a particular network slice instance can be, for example, a PCF.

The network function enforcing an operator's policy for which a network slice to associate a UE to a particular network slice instance can be, for example, an NSSF or an AMF.

The network function storing an indication which specifies whether a UE is needed to be associated with a certain network slice instance during the UE registration or when the UE attaches the mobile communication network could be, for example, a UDM.

The mobile radio communication network (e.g. the receiver, the memory and the one or more processors) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

## Claims

1. A method (700) for associating a mobile radio terminal device (102) to a network slice instance (108, 109) of a mobile radio communication network (800), the method comprising:
• the mobile radio terminal device (102) accessing the mobile radio communication network (800);
• the mobile radio communication network (800) receiving (701) a request for connecting to a network slice (106, 107) from the mobile radio terminal device (102);
• the mobile radio communication network determining an associating information parameter from a terminal device specific subscription profile stored in the mobile radio communication network (800), wherein the associating information parameter indicates whether the association should be performed during a registration process of the mobile radio terminal device or during a protocol data unit session establishment; and
• based on the associating information parameter assigned to the requesting mobile radio terminal device (102), the mobile radio communication network (800) associating (702) the mobile radio terminal device (102) to a network slice instance (108, 109) from a set of network slice instances during a registration process of the mobile radio terminal device (102) or during a protocol data unit session establishment.

2. The method (700) of claim 1,
wherein the profile is a mobile radio communication network (800) subscriber specific profile.

3. The method (700) of any one of claims 1 or 2,
wherein the profile is a User Equipment subscription profile.

4. The method (700) of any one of claims 1 to 3,
wherein the associating information parameter is stored in a user data management function of the mobile radio communication network (800).

5. The method of any one of claims 1 to 4,
if the associating information parameter does not indicate (910) whether early binding or late binding is required, determining early binding or late binding based on local configuration.

6. The method of any one of claims 1 to 4,
wherein a list of visitor-allowed Network Slice Selection Assistance information, NSSAI, comprises a respectively assigned parameter of the associating information parameter indicating whether early binding or late binding is provided for the respective NSSAI.

7. A computer readable medium having stored a plurality of instructions, when carried out by one or more processors (803), implement a method for associating a mobile radio terminal device (102) to a network slice instance (108, 109) of a mobile radio communication network (800) of any one of claims 1 to 6.

8. A mobile radio communication network (800), comprising:
• a mobile radio terminal device (102) configured to access the mobile radio communication network (800);
• a receiver (801) configured to receive a request for connecting to a network slice (106, 107);
• a memory (802) storing at least one information parameter assigned to a mobile radio terminal device representing an associating indication information for associating the mobile radio terminal device (102) to a network slice instance (108, 109); and
• one or more processors (803) configured to associate the mobile radio terminal device (102) to a network slice instance (108, 109) from a set of network slice instances, determine the associating information parameter from a terminal device specific subscription profile stored in the mobile radio communication network (800), wherein, based on a stored associating information parameter assigned to the requesting mobile radio terminal device (102), the associating information parameter indicates whether the association should be performed during a registration process of the mobile radio terminal device (102) or during a protocol data unit session establishment.

9. The mobile radio communication network (800) of claim 8,
wherein the one or more processors (803) are one or more processors of a mobile radio communication core network.

10. The mobile radio communication network (800) of any one of claims 8 or 9,
wherein the one or more processors (803) are configured to perform a mobile radio communication network (800) operator's policy for selecting a network slice (106, 107), to associate the mobile radio terminal device (102) to a particular network slice instance (108, 109).

11. The mobile radio communication network (800) of claim 10,
wherein the performing a mobile radio communication network operator's policy is implemented by a policy control function of the mobile radio communication network (800).

12. The mobile radio communication network (800) of claim 10,
wherein the performing a mobile radio communication network (800) operator's policy is implemented by a network slice selection function of the mobile radio communication network (800).

13. The mobile radio communication network (800) of claim 10,
wherein the performing a mobile radio communication network (800) operator's policy is implemented by an access and mobility management function of the mobile radio communication network (800).

14. The mobile radio communication network (800) of any one of claims 8 to 13,
wherein, if the associating information parameter does not indicate (910) whether early binding or late binding is required, determining early binding or late binding based on local configuration by an Access and Mobility Management Function, AMF.

15. The mobile radio communication network (800) of any one of claims 8 to 13,
wherein a list of visitor-allowed Network Slice Selection Assistance information, NSSAI, comprises a respectively assigned parameter of the associating information parameter indicating whether early binding or late binding is provided for the respective NSSAI.

## Patentansprüche

1. Verfahren (700) zum Zuordnen eines Mobilfunkendgeräts (102) an eine Netzwerk-Slice-Instanz (108, 109) eines Mobilfunkkommunikationsnetzwerks (800), wobei das Verfahren umfasst:
• Zugreifen des Mobilfunkendgeräts (102) auf das Mobilfunkkommunikationsnetzwerk (800);
• Empfangen (701) einer Anforderung vom Mobilfunkendgerät (102) durch das Mobilfunkkommunikationsnetzwerk (800) zum Verbinden mit einem Netzwerk-Slice (106, 107);
• Bestimmen eines Zuordnungsinformationsparameters aus einem endgerätespezifischen Teilnehmerprofil, das im Mobilfunkkommunikationsnetzwerk (800) gespeichert wird, durch das Mobilfunkkommunikationsnetzwerk, wobei der Zuordnungsinformationsparameter angibt, ob die Zuordnung während eines Registrierungsvorgangs des Mobilfunkendgeräts oder während eines Sitzungsaufbaus einer Protokolldateneinheit erfolgen soll; und
• basierend auf dem Zuordnungsinformationsparameter, der dem anfragenden Mobilfunkendgerät (102) zugewiesen ist, Zuordnen (702) des Mobilfunkendgeräts (102) zu einer Netzwerk-Slice-Instanz (108, 109) aus einem Satz von Netzwerk-Slice-Instanzen durch das Mobilfunkkommunikationsnetzwerk (800) während eines Registrierungsprozesses des Mobilfunkendgeräts (102) oder während eines Sitzungsaufbaus einer Protokolldateneinheit.

2. Verfahren (700) nach Anspruch 1,
wobei das Profil ein spezifisches Profil eines Teilnehmers eines Mobilfunkkommunikationsnetzwerks (800) ist.

3. Verfahren (700) nach einem der Ansprüche 1 oder 2,
wobei das Profil ein Benutzergeräte-Teilnehmerprofil ist.

4. Verfahren (700) nach einem der Ansprüche 1 bis 3,
wobei der Zuordnungsinformationsparameter in einer Benutzerdatenverwaltungsfunktion des Mobilfunkkommunikationsnetzwerks (800) gespeichert wird.

5. Verfahren nach einem der Ansprüche 1 bis 4,
wenn der Zuordnungsinformationsparameter nicht angibt (910), ob eine frühe Bindung oder eine späte Bindung erforderlich ist, Bestimmen einer frühen Bindung oder einer späten Bindung basierend auf einer lokalen Konfiguration.

6. Verfahren nach einem der Ansprüche 1 bis 4,
wobei eine Liste von NSSAI-Informationen (NSSAI = Visitor-allowed Network Slice Selection Assistance) einen jeweils zugewiesenen Parameter des Zuordnungsinformationsparameters umfasst, der angibt, ob eine frühe Bindung oder eine späte Bindung für die jeweilige NSSAI bereitgestellt wird.

7. Ein computerlesbares Medium, das eine Mehrzahl von Anweisungen gespeichert hat, implementiert, wenn es von einem oder mehreren Prozessoren (803) ausgeführt wird, ein Verfahren zum Zuordnen eines Mobilfunkendgeräts (102) zu einer Netzwerk-Slice-Instanz (108, 109) eines Mobilfunkkommunikationsnetzwerks (800) nach einem der Ansprüche 1 bis 6.

8. Mobilfunkkommunikationsnetzwerk (800), umfassend:
• ein Mobilfunkendgerät (102), das konfiguriert ist, um auf das Mobilfunkkommunikationsnetzwerk (800) zuzugreifen;
• einen Empfänger (801), der konfiguriert ist, um eine Anforderung zum Verbinden mit einem Netzwerk-Slice (106, 107) zu empfangen;
• einen Speicher (802), der zumindest einen Informationsparameter speichert, der einem Mobilfunkendgerät zugewiesen ist, und der eine Zuordnungsanzeigeinformation zum Zuordnen des Mobilfunkendgeräts (102) zu einer Netzwerk-Slice-Instanz (108, 109) darstellt; und
• einen oder mehrere Prozessoren (803), die konfiguriert sind, um das Mobilfunkendgerät (102) einer Netzwerk-Slice-Instanz (108, 109) aus einem Satz von Netzwerk-Slice-Instanzen zuzuordnen, und den Zuordnungsinformationsparameter aus einem in dem Mobilfunkkommunikationsnetzwerk (800) gespeicherten endgerätespezifischen Teilnehmerprofil zu bestimmen, wobei der Zuordnungsinformationsparameter basierend auf einem gespeicherten Zuordnungsinformationsparameter, der dem anfordernden Mobilfunkendgerät (102) zugewiesen ist, angibt, ob die Zuordnung während eines Registrierungsprozesses des Mobilfunkendgeräts (102) oder während eines Sitzungsaufbaus einer Protokolldateneinheit durchgeführt werden soll.

9. Mobilfunkkommunikationsnetzwerk (800) nach Anspruch 8,
wobei der eine oder die mehreren Prozessoren (803) ein oder mehrere Prozessoren eines Mobilfunk-Kommunikationskernnetzwerks sind.

10. Mobilfunkkommunikationsnetzwerk (800) nach einem der Ansprüche 8 oder 9,
wobei der eine oder die mehreren Prozessoren (803) konfiguriert sind, um die Richtlinie eines Betreibers eines Mobilfunkkommunikationsnetzwerks (800) zum Auswählen einer Netzwerk-Slice (106, 107) auszuführen, um das Mobilfunkendgerät (102) an eine bestimmte Netzwerk-Slice-Instanz zuzuordnen (108, 109).

11. Mobilfunkkommunikationsnetzwerk (800) nach Anspruch 10,
wobei das Ausführen der Richtlinie eines Betreibers eines Mobilfunkkommunikationsnetzwerks durch eine Richtliniensteuerfunktion des Mobilfunkkommunikationsnetzwerks (800) implementiert wird.

12. Mobilfunkkommunikationsnetzwerk (800) nach Anspruch 10,
wobei das Ausführen der Richtlinie eines Betreibers eines Mobilfunkkommunikationsnetzwerks (800) durch eine Netzwerk-Slice-Auswahlfunktion des Mobilfunkkommunikationsnetzwerks (800) implementiert wird.

13. Mobilfunkkommunikationsnetzwerk (800) nach Anspruch 10,
wobei das Ausführen der Richtlinie eines Betreibers eines Mobilfunkkommunikationsnetzwerks (800) durch eine Zugangs- und Mobilitätsverwaltungsfunktion des Mobilfunkkommunikationsnetzwerks (800) implementiert wird.

14. Mobilfunkkommunikationsnetzwerk (800) nach einem der Ansprüche 8 bis 13,
wobei, wenn der Zuordnungsinformationsparameter nicht angibt (910), ob eine frühe Bindung oder eine späte Bindung erforderlich ist, die frühe Bindung oder die späte Bindung basierend auf einer lokalen Konfiguration durch eine Zugangs- und Mobilitätsfunktion (AMF = Access and Mobility Management Function) bestimmt wird.

15. Mobilfunkkommunikationsnetzwerk (800) nach einem der Ansprüche 8 bis 13,
wobei eine Liste von NSSAI-Informationen (NSSAI = Visitor-allowed Network Slice Selection Assistance) einen jeweils zugewiesenen Parameter des Zuordnungsinformationsparameters umfasst, der angibt, ob eine frühe Bindung oder eine späte Bindung für die jeweilige NSSAI bereitgestellt wird.

## Revendications

1. Procédé (700) d'association d'un dispositif de terminal radio mobile (102) à une instance de tranche de réseau (108, 109) d'un réseau de communication radio mobile (800), le procédé comprenant les étapes ci-dessous dans lesquelles :
• le dispositif de terminal radio mobile (102) accède au réseau de communication radio mobile (800) ;
• le réseau de communication radio mobile (800) reçoit (701) une demande de connexion à une tranche de réseau (106, 107) en provenance du dispositif de terminal radio mobile (102) ;
• le réseau de communication radio mobile détermine un paramètre d'informations d'association à partir d'un profil d'abonnement spécifique de dispositif de terminal stocké dans le réseau de communication radio mobile (800), dans lequel le paramètre d'informations d'association indique si l'association doit être mise en oeuvre au cours d'un processus d'enregistrement du dispositif de terminal radio mobile ou au cours d'un établissement de session d'unité de données de protocole ; et
• sur la base du paramètre d'informations d'association affecté au dispositif de terminal radio mobile demandeur (102), le réseau de communication radio mobile (800) associe (702) le dispositif de terminal radio mobile (102) à une instance de tranche de réseau (108, 109) parmi un ensemble d'instances de tranches de réseau au cours d'un processus d'enregistrement du dispositif de terminal radio mobile (102), ou au cours d'un établissement de session d'unité de données de protocole.

2. Procédé (700) selon la revendication 1,
dans lequel le profil est un profil spécifique d'abonné de réseau de communication radio mobile (800).

3. Procédé (700) selon l'une quelconque des revendications 1 et 2,
dans lequel le profil est un profil d'abonnement d'équipement d'utilisateur.

4. Procédé (700) selon l'une quelconque des revendications 1 à 3,
dans lequel le paramètre d'informations d'association est stocké dans une fonction de gestion de données d'utilisateur du réseau de communication radio mobile (800).

5. Procédé selon l'une quelconque des revendications 1 à 4,
si le paramètre d'informations d'association n'indique pas (910) si une liaison précoce ou une liaison tardive est requise, déterminant une liaison précoce ou une liaison tardive sur la base d'une configuration locale.

6. Procédé selon l'une quelconque des revendications 1 à 4,
dans lequel une liste d'informations d'aide à la sélection de tranche de réseau, NSSAI, autorisées aux visiteurs comprend un paramètre respectivement affecté du paramètre d'informations d'association indiquant si une liaison précoce ou une liaison tardive est fournie pour les informations NSSAI respectives.

7. Support lisible par ordinateur dans lequel est stockée une pluralité d'instructions, qui, lorsqu'elles sont exécutées par un ou plusieurs processeurs (803), mettent en oeuvre un procédé d'association d'un dispositif de terminal radio mobile (102) à une instance de tranche de réseau (108, 109) d'un réseau de communication radio mobile (800) selon l'une quelconque des revendications 1 à 6.

8. Réseau de communication radio mobile (800), comprenant :
• un dispositif de terminal radio mobile (102) configuré de manière à accéder au réseau de communication radio mobile (800) ;
• un récepteur (801) configuré de manière à recevoir une demande de connexion à une tranche de réseau (106, 107) ;
• une mémoire (802) stockant au moins un paramètre d'informations affecté à un dispositif de terminal radio mobile représentant des informations d'indication d'association pour associer le dispositif de terminal radio mobile (102) à une instance de tranche de réseau (108, 109) ; et
• un ou plusieurs processeurs (803) configurés de manière à associer le dispositif de terminal radio mobile (102) à une instance de tranche de réseau (108, 109) parmi un ensemble d'instances de tranches de réseau, à déterminer le paramètre d'informations d'association à partir d'un profil d'abonnement spécifique de dispositif de terminal stocké dans le réseau de communication radio mobile (800), dans lequel, sur la base d'un paramètre d'informations d'association stocké affecté au dispositif de terminal radio mobile demandeur (102), le paramètre d'informations d'association indique si l'association devrait être mise en oeuvre au cours d'un processus d'enregistrement du dispositif de terminal radio mobile (102), ou au cours d'un établissement de session d'unité de données de protocole.

9. Réseau de communication radio mobile (800) selon la revendication 8, dans lequel ledit un ou lesdits plusieurs processeurs (803) correspondent à un ou plusieurs processeurs d'un réseau central de communication radio mobile.

10. Réseau de communication radio mobile (800) selon l'une quelconque des revendications 8 et 9,
dans lequel ledit un ou lesdits plusieurs processeurs (803) sont configurés de manière à mettre en oeuvre une politique d'un opérateur de réseau de communication radio mobile (800) pour sélectionner une tranche de réseau (106, 107), et à associer le dispositif de terminal radio mobile (102) à une instance de tranche de réseau spécifique (108, 109).

11. Réseau de communication radio mobile (800) selon la revendication 10, dans lequel l'étape de mise en oeuvre de la politique d'un opérateur de réseau de communication radio mobile est mise en oeuvre par une fonction de commande de politique du réseau de communication radio mobile (800).

12. Réseau de communication radio mobile (800) selon la revendication 10, dans lequel l'étape de mise en oeuvre de la politique d'un opérateur de réseau de communication radio mobile (800) est mise en oeuvre par une fonction de sélection de tranche de réseau du réseau de communication radio mobile (800).

13. Réseau de communication radio mobile (800) selon la revendication 10, dans lequel l'étape de mise en oeuvre de la politique d'un opérateur de réseau de communication radio mobile (800) est mise en oeuvre par une fonction de gestion d'accès et de mobilité du réseau de communication radio mobile (800).

14. Réseau de communication radio mobile (800) selon l'une quelconque des revendications 8 à 13,
dans lequel, si le paramètre d'informations d'association n'indique pas (910) si une liaison précoce ou une liaison tardive est requise, une étape consiste à déterminer une liaison précoce ou une liaison tardive sur la base d'une configuration locale par le biais d'une fonction de gestion d'accès et de mobilité, AMF.

15. Réseau de communication radio mobile (800) selon l'une quelconque des revendications 8 à 13,
dans lequel une liste d'informations d'aide à la sélection de tranche de réseau, NSSAI, autorisées aux visiteurs comprend un paramètre respectivement affecté du paramètre d'informations d'association indiquant si une liaison précoce ou une liaison tardive est fournie pour les informations NSSAI respectives.
